# EUROPEAN PATENT APPLICATION

(11) **EP 1 780 661 A1**
(43) Date of publication of application: **02.05.2007**
(21) Application number: 06123019.9
(22) Date of filing: 26.10.2006
(51) Int. Cl.: G06K 19/073

(54) **RFID tag**

(30) Priority: 28.10.2005 JP 2005314574
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Baba, Shunji, c/o Fujitsu Limited, Kawasaki-shi, Kanagawa 211-8588 (JP); Ikuta, Yuichi, c/o Sealex Corporation, Tokyo 111-0052 (JP); Sakaguchi, Kazushige, c/o Sealex Corporation, Tokyo 111-0052 (JP)
(74) Representative: Kreutzer, Ulrich

(57) **Abstract**

An RFID tag includes: a first sheet (11); a conductor pattern (21, 22) provided on the first sheet and at least partially forming a communication antenna (21); a circuit chip (23) electrically connected to the antenna (21) formed by the conductor pattern and performing radio communication via the antenna. The RFID tag further includes: a second sheet (14, 15) detachably attached to the first sheet (11) by covering the conductor pattern (21, 22) and the circuit chip (23) so as to be detached together with a part of the pattern when detached from the first sheet (11); and a release layer (31) provided between the part of the conductor pattern and the first sheet (11).

## Description

### BACKGROUND OF THE INVENTION

### Field of the Invention

The present invention relates to an RFID (Radio_Frequency_Identification) tag for exchanging information with an external device in a noncontact manner. There are the cases where those in the art refer to the "RFID tag" used herein as an "RFID tag inlay" regarding it as an inlay for the "RFID tag." There are also the cases where the "RFID tag" is referred to as a "Radio Frequency IC tag." The "RFID tag" also includes a noncontact IC card.

### Description of the Related Art

In recent years, there are proposals of various kinds of RFID tags for exchanging information with an external device represented by a reader-writer in a noncontact manner via radio waves. There is a proposal of a kind of the RFID tag having a configuration in which an antenna pattern for radio communication and an IC chip are mounted on a base sheet consisting of plastic or paper. As for such a type of the RFID tag, there is a considered usage wherein it is attached to an article or the like and the information on the article is exchanged with the external device to identify the article.

In the case of such a usage of the RFID tag, there may occur an unauthorized use of causing the external device to misidentify the article by detaching the RFID tag attached to a certain article from that article and attaching it to another article so as to obtain an expensive article for sale as an inexpensive article for sale for instance. Thus, a technique for avoiding such an unauthorized use is expected.

Concerning such a status, there is a technique configured to break a circuit by detaching a part of a conductor pattern configuring the antenna and the like and the IC chip upon detachment of the RFID tag (refer to Japanese Patent Laid-Open No. 2004-227273, for instance).

The RFID tag of Japanese Patent Laid-Open No. 2004-227273 has an adhesive layer including the circuit and the like on the entire undersurface of an uppermost sheet. The adhesive layer is attached to the article. The RFID tag has a release agent in a part between the uppermost sheet and the adhesive layer. Thus, if the uppermost sheet is detached after being attached to the article, an adhesive force works on the article side in the part having the release agent while the adhesive force works on the sheet side in the part having no release agent. And then a shearing force is generated in the adhesive layer so that the adhesive layer is torn off. Consequently, the circuit and the like included in the adhesive layer are also torn off so as to break the circuit.

However, there are the cases where the part of the circuit to be eliminated cannot be securely eliminated by the configuration in which the adhesive layer is torn off by the shearing force working in the adhesive layer to indirectly break the circuit inside the adhesive layer.

There is also a problem that the configuration having the circuit and the like included in the adhesive layer becomes a complicated configuration including lamination of the adhesive layer and the like, which leads to increased cost.

In view of the circumstances, the present invention provides the RFID tag having a simple configuration and securely breaking an internal circuit.

### SUMMARY OF THE INVENTION

The present invention provides an RFID tag including:
a first sheet;
a conductor pattern provided on the first sheet and at least partially forming a communication antenna;
a circuit chip electrically connected to the antenna formed by the conductor pattern and performing radio communication via the antenna;
a second sheet detachably attached to the first sheet by covering the conductor pattern and the circuit chip so as to be detached together with a part of the conductor pattern when detached from the first sheet; and
a release layer provided between the part of the conductor pattern and the first sheet.

According to the RFID tag of the present invention, the release layer is formed between the first sheet and the conductor pattern. Therefore, the pattern portion on the release layer is easily separable from the first sheet, and a part of the conductor pattern is eliminated from the first sheet by adhesion of the second sheet if the second sheet is detached from the first sheet. Consequently, a circuit consisting of the conductor pattern and the circuit chip is broken. Thus, the circuit can be easily broken by a simple configuration having the release layer between the part of the conductor pattern and the first sheet. As the second sheet adheres directly to the portion to be broken of the conductor pattern, the portion to be broken can be securely broken.

In the RFID tag of the present invention, preferably, the circuit chip also detects destruction to a predetermined pattern portion of the conductor pattern;
the second sheet is detachable together with at least a detachable portion of the pattern portion when detached from the first sheet; and
the release layer is provided between the detachable portion and the first sheet.

According to this RFID tag, if the first sheet is detached, the pattern portion for detecting detachment is surely destroyed, and the destruction of the pattern portion is securely detected by the circuit chip. For this reason, it is possible to obtain the RFID tag of high security capable of securely detecting unauthorized detachment of the RFID tag and the like.

As described above, the RFID tag of the present invention has a simple configuration and securely breaks an internal circuit.

### BRIEF DESCRIPTION OF THE DRAWINGS

Fig. 1 is a sectional view of an unused RFID tag;
Fig. 2 is an explanatory diagram of a circuit pattern of the RFID tag;
Figs. 3(a) and 3(b) are sectional views of the RFID tag in use; and
Figs. 4(a) and 4(b) are diagrams showing another embodiment of the RFID tag of the present invention.

### DETAILED DESCRIPTION OF THE INVENTION

Embodiments of the present invention will be described with reference to the attached drawings.

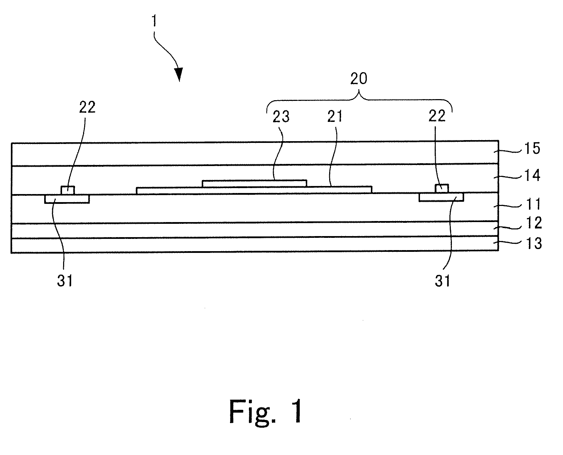

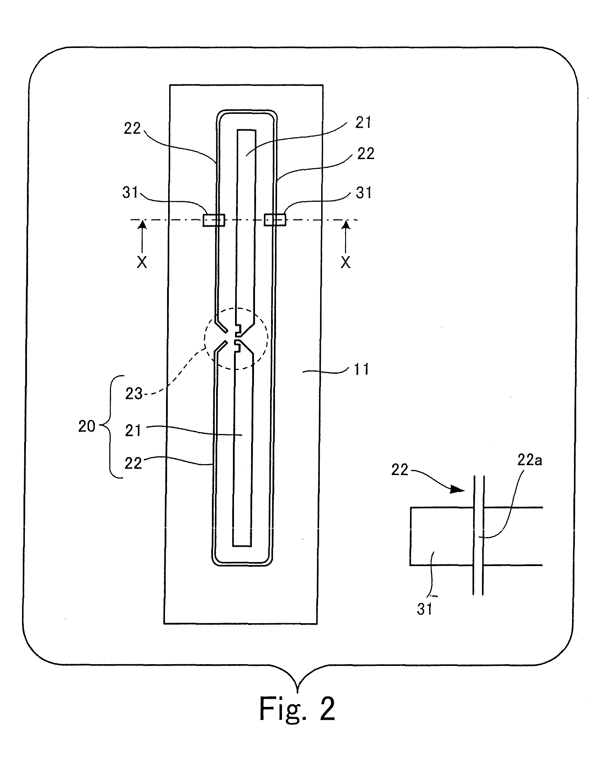

Fig. 1 is a sectional view of an unused RFID tag 1, and Fig. 2 is an explanatory diagram of a circuit pattern of the RFID tag 1. Fig. 1 shows an X to X cross section of Fig. 2, and Fig. 2 omits a protective layer and an adhesion layer of Fig. 1 for convenience of illustration.

The configuration of the RFID tag 1 will be described by using Figs. 1 and 2. The RFID tag 1 is configured by multiple layers as in Fig. 1.

As shown in Fig. 1, the RFID tag 1 is provided with a base material layer 11 which is equivalent to an example of a first sheet according to the present invention. The base material layer 11 is the layer as a base on which the layers are formed, and is configured by a plastic resin or the like. As a lower layer to the base material layer 11, an adhesive layer 12 configured by an adhesive is formed to be attached to an object such as an article. As the lower layer to the adhesive layer 12, a release layer 13 for protecting the adhesive layer 12 when the RFID tag 1 is unused and being detached when the RFID tag 1 is used is formed.

As upper layers of the base material layer 11, an adhesion layer 14 and a protective layer 15 are formed. The protective layer 15 protects the surface of the RFID tag 1. The adhesive of the adhesion layer 14 has higher adhesion to the protective layer 15 than to the base material layer 11, and the adhesion of the adhesion layer 14 to the base material layer 11 is lower than an adhesive force of the adhesive layer 12 to an object. For this reason, the adhesion layer 14 and the protective layer 15 are integrally formed and detachable from the base material layer 11. The protective layer 15 and the adhesion layer 14 configure an example of a second sheet according to the present invention.

A circuit portion 20 is formed on the base material layer 11. The circuit portion 20 includes an antenna pattern 21, a detection pattern 22 and an IC chip 23. The circuit portion 20 is fixed to the base material layer 11 more firmly than the adhesion of the adhesion layer 14. The antenna pattern 21 and detection pattern 22 configure an example of a conductor pattern according to the present invention, and the IC chip 23 is equivalent to an example of a circuit chip according to the present invention.

The base material layer 11 has a circuit pattern shown in Figs. 1 and 2 transferring-printed in conductive ink thereon. The circuit pattern includes the antenna pattern 21 playing a role of the antenna for sending and receiving radio wave and the detection pattern 22 provided to detect detachment of the protective layer 15. As shown in Fig. 2, the IC chip 23 is placed on the antenna pattern 21 and detection pattern 22 and under the adhesion layer 14 to connect to both the antenna pattern 21 and detection pattern 22. The IC chip 23 performs communication with an external device via the antenna pattern 21, and detects destruction to the detection pattern 22 if it occurs so as to notify the external device thereof as described below.

The base material layer 11 has a release layer 31 formed at a position under a release portion 22a provided to a part of the detection pattern 22. The release layer 31 is formed before transferring-printing the circuit pattern on the base material layer 11, and the release portion 22a transferring-printed on the release layer 31 is in an easily detachable state not being firmly fixed to the release layer 31. The release layer 31 is equivalent to an example of the release layer according to the present invention.

Next, a use situation of the RFID tag 1 will be described.

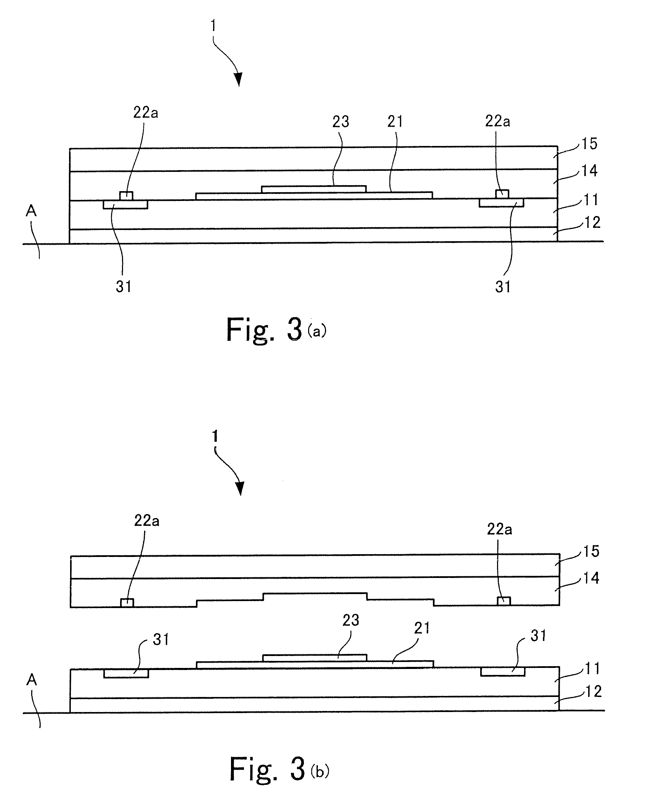

Figs. 3(a) and 3(b) are sectional views of the RFID tag 1 in use. Figs. 3(a) and 3(b) also show the X to X cross section of Fig. 2.

As shown in Fig. 3(a), when the RFID tag 1 is used, the release layer 13 is eliminated first, and then the RFID tag 1 is attached to an article A which is an article for sale, a container of the article for sale or the like by the adhesive layer 12. In this state, the detection pattern 22 is in a conductive status as shown in Fig. 2, and the IC chip 23 recognizes that the protective layer 15 is not detached in this state.

Next, in the case where the RFID tag 1 is no longer necessary after the use or in the case where an unauthorized user tries to detach the RFID tag 1 from the article A, the protective layer 15 is detached from the base material layer 11 in the state where the base material layer 11 is attached to the article A by the adhesive layer 12 as shown in Fig. 3(b). Here, the adhesion of the adhesion layer 14 integrally formed with the protective layer 15 is not high enough to separate the circuit patterns (the antenna pattern 21 and the detection pattern 22 shown in Fig. 2) and the IC chip 23 from the base material layer 11. For this reason, the adhesion layer 14 and protective layer 15 separate in the state where the antenna pattern 21, detection pattern 22 and IC chip 23 are left on the base material layer 11.

However, the release layer 31 is formed between the release portion 22a of the detection pattern 22 and the base material layer 11 so that the release portion 22a is easily separable from the release layer 31. For this reason, the release portion 22a is separated from the release layer 31 by the adhesion of the adhesion layer 14.

Here, most of the detection pattern 22 is left on the base material layer 11 as described above while only the release portion 22a is separated from the release layer 31 on the base material layer 11 by the adhesion layer 14. For this reason, the detection pattern 22 is broken by having only the portion of the release portion 22a eliminated from the base material layer 11. If the detection pattern 22 is thus broken, the IC chip 23 recognizes that the protective layer 15 is detached based on change in resistance of the detection pattern 22 and the like.

The IC chip 23 having thus recognized the detachment of the protective layer 15 prohibits reading and writing to data of an internal memory so as to prevent an unauthorized use.

The present invention may adopt control for rendering the data of the internal memory of the IC chip 23 readable and writeable if the detection pattern 22 is in a conduction state and rendering the data from the internal memory of the IC chip 23 readable only if the detection pattern 22 is in an insulation state. If such control is adopted, it is possible, when transporting the article for sale for instance, to attach the RFID tag 1 to the article for sale and read and write during the transportation so that a worker can read the information on the article for sale and record the status of the transportation. It is also possible, by detaching the protective layer 15 after the transportation of the article, to read only the information on the article so as to help quality control.

According to the embodiment described above, the antenna pattern 21, detection pattern 22 and IC chip 23 are left on the article A side by detaching the protective layer 15. However, the RFID tag of the present invention is not limited thereto. For instance, if the protective layer 15 is detached from the base material layer 11, the antenna pattern 21, detection pattern 22 and IC chip 23 may be left on the protective layer 15 side as with another embodiment described below.

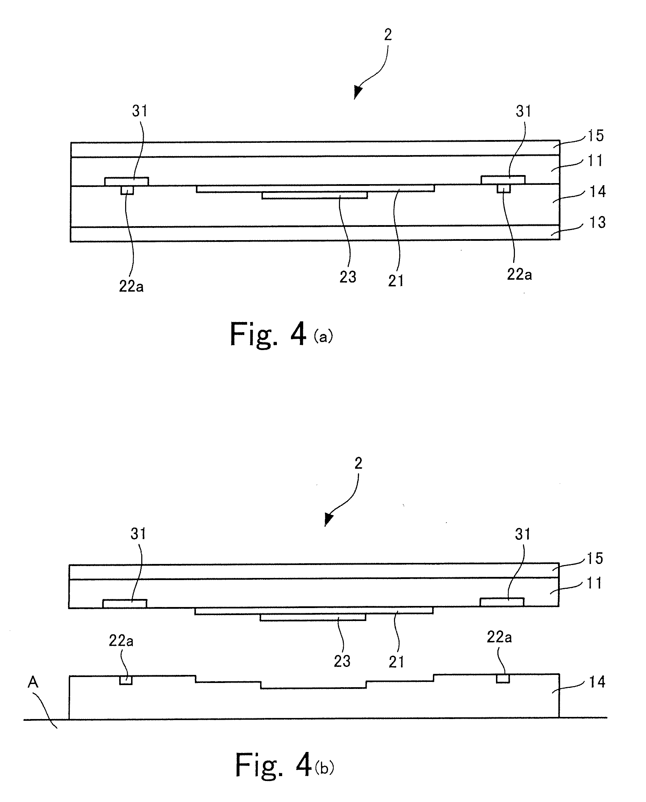

Figs. 4(a) and 4(b) are diagrams showing another embodiment of the RFID tag of the present invention.

Fig. 4(a) shows a sectional view of an unused RFID tag 2, and Fig. 4(b) shows a sectional view of the RFID tag 2 in use.

As shown in Fig. 4(a), the RFID tag 2 is provided with the base material layer 11 which has the protective layer 15 formed as an upper layer thereof and the adhesion layer 14 formed as a lower layer thereof. The antenna pattern 21, detection pattern 22 (only the release portion 22a which is a part of the detection pattern is shown in Fig. 4(a)) and IC chip 23 configuring the circuit portion are formed under the base material layer 11 and on the adhesion layer 14. The release layer 31 is formed between the release portion 22a and the base material layer 11. The release layer 13 for protecting the adhesion layer 14 when unused and being detached in use is formed under the adhesion layer 14.

In the case of the embodiment shown in Figs. 4(a) and 4(b), an example of the first sheet according to the present invention is formed by the base material layer 11 and protective layer 15. The adhesion layer 14 is equivalent to an example of the second sheet according to the present invention.

As shown in Fig. 4(b), when using the RFID tag 2, the release layer 13 is eliminated, and the RFID tag 2 is attached to the article A which is an article for sale, a container of the article for sale or the like by the adhesion layer 14. And if the protective layer 15 is detached thereafter, the base material layer 11 integral with the protective layer 15 and the antenna pattern 21, detection pattern 22 and IC chip 23 firmly fixed to the base material layer 11 are separated from the adhesion layer 14 together with the protective layer 15. In this case, the release layer 31 is formed between the release portion 22a of the detection pattern 22 and the base material layer 11. As the release portion 22a is easily separable from the release layer 31, the release portion 22a is separated from the release layer 31 by the adhesion of the adhesion layer 14 so as to remain on the adhesion layer 14. Consequently, the detection pattern 22 is broken, and the IC chip 23 recognizes that the protective layer 15 is detached.

Thus, the detection pattern 22 is broken and the detachment of the protective layer 15 is recognized even if the part of the circuit portion left on the article side and the detached part are reversed.

## Claims

1. An RFID tag (1) comprising:
a first sheet (11);
a conductor pattern (21, 22) provided on the first sheet and at least partially forming a communication antenna (21);
a circuit chip (23) electrically connected to the antenna formed by the conductor pattern and performing radio communication via the antenna;
a second sheet (14, 15) detachably attached to the first sheet (11) by covering the conductor pattern (21, 22) and the circuit chip (23) so as to be detached together with a part of the pattern when detached from the first sheet (11); and
a release layer (31) provided between the part of the conductor pattern and the first sheet (11).

2. The RFID tag according to claim 1, wherein the circuit chip (23) also detects destruction to a predetermined pattern portion of the conductor pattern (21, 22);
the second sheet (14) is detachable together with at least a detachable portion (22a) of the pattern portion when detached from the first sheet (11); and
the release layer (31) is provided between the detachable portion (22a) and the first sheet (11).
